# EUROPEAN PATENT APPLICATION

(11) **EP 4 418 240 A1**
(43) Date of publication of application: **21.08.2024**
(21) Application number: 23798873.8
(22) Date of filing: 24.02.2023
(51) Int. Cl.: G09B 21/00, G09B 19/06, G09B 1/04

(54) **TEACHING AID FOR TEACHING INTEGRATED VISUAL AND TACTILE PERCEPTION**

(30) Priority: 27.12.2022 KR 20220185269
(71) Applicant: SENSEE, INC., Jung-gu Daejeon 34948 (KR)
(72) Inventor: CHO, Ji Yun, Daejeon 35407 (KR)
(74) Representative: Frenkel, Matthias Alexander
(86) International application number: PCT/KR2023/002644
(87) International publication number: WO 2024/143698

(57) **Abstract**

An object of the present invention is to provide an intuitive teaching tool enabling integrated perception education for visual and tactile sensations, capable of allowing learners to train cognitive abilities by themselves.

According to one embodiment of the present invention, a teaching tool enabling integrated perception education for visual and tactile sensations, the teaching tool including: a front sheet for allowing a contour of an object to be recognized through a tactile sensation, wherein the front sheet includes: an information part in which a picture related to the object is shown, or a character string related to the object is written; a braille part for displaying a dot corresponding to vertical and horizontal dots of a braille, in which the braille for guiding a content of the information part protrudes; and a shape part in which the contour of the object corresponding to a content of the braille part is expressed, and the shape part includes a tactile stimulus contour obtained by allowing the contour of the object to protrude so as to be recognized through the tactile sensation.

## Description

### TECHNICAL FIELD

The present invention relates to a teaching tool enabling integrated perception education for visual and tactile sensations, and more particularly, to a teaching tool enabling integrated perception education for visual and tactile sensations, capable of allowing learners to train cognitive abilities by themselves.

### BACKGROUND ART

In general, more detailed instruction, such as training of an auditory sensation ability through a learning instructor, may be required in order to develop cognitive abilities of children with visual impairments, and there may be limitations in that a child has to remember all learning contents to perform learning in an independent environment without a learning instructor. In order to overcome such an environment, various teaching tools have been developed to allow visually impaired children to perform self-directed training of cognitive abilities. However, since such teaching tools are biased toward teaching tools related to an auditory sensation, the teaching tools are very limited. In addition, recently, education through cyber lectures, remote classes, and the like has been actively conducted. However, such education through non-face-to-face classes may provide educational contents to visually impaired children through a braille, a voice, and the like, so that accessibility may be very low to visually impaired children who lack basic knowledge.

Due to such imperfections of the teaching tools and the education, education for developing cognitive abilities of visually impaired children has fallen entirely to learning instructors, which is a great stress factor for the learning instructors as well as the visually impaired children who receive the education.

Furthermore, as society becomes more complex, needs for braille learning of the general public are increasing due to an increase in the number of people with midlife visual impairments and an increase in interest in braille of the general public. However, there is a lack of teaching tools that facilitates the braille learning regardless of a time and a place.

Accordingly, there is a demand for development of an intuitive and simple teaching tool for allowing learners including visually impaired people and the general public to perform self-directed training of cognitive abilities, and allowing the learners to perform learning by themselves.

### DESCRIPTION OF EMBODIMENTS

### TECHNICAL PROBLEM

An object of the present invention is to provide an intuitive teaching tool enabling integrated perception education for visual and tactile sensations, capable of allowing learners to train cognitive abilities by themselves.

### TECHNICAL SOLUTION

According to one embodiment of the present invention, a teaching tool enabling integrated perception education for visual and tactile sensations, the teaching tool including: a front sheet for allowing a contour of an object to be recognized through a tactile sensation, wherein the front sheet includes: an information part in which a picture related to the object is shown, or a character string related to the object is written; a braille part for displaying a dot corresponding to vertical and horizontal dots of a braille, in which the braille for guiding a content of the information part protrudes; and a shape part in which the contour of the object corresponding to a content of the braille part is expressed, and the shape part includes a tactile stimulus contour obtained by allowing the contour of the object to protrude so as to be recognized through the tactile sensation.

The teaching tool may further include a rear sheet attached to a rear surface of the front sheet, and the rear sheet may include a line guide groove formed to allow the contour of the object to be recognized through the tactile sensation and configured to guide the contour of the object.

The line guide groove may overlap the tactile stimulus contour formed on the front sheet.

The rear sheet may further include a braille guide groove formed in a region corresponding to the braille part of the front sheet.

### ADVANTAGEOUS EFFECTS OF DISCLOSURE

According to the teaching tool enabling the integrated perception education for the visual and tactile sensations of one embodiment of the present invention, learners can learn information of an object by themselves.

In addition, according to the teaching tool enabling the integrated perception education for the visual and tactile sensations of one embodiment of the present invention, shape information of an object can be recognized, and a braille corresponding to the information of the object can be learned.

### BRIEF DESCRIPTION OF THE DRAWINGS

FIG. 1 is a perspective view schematically showing a front sheet of a teaching tool enabling integrated perception education for visual and tactile sensations according to one embodiment of the present invention.
FIG. 2 is a perspective view schematically showing a rear sheet of the teaching tool enabling the integrated perception education for the visual and tactile sensations according to one embodiment of the present invention.
FIG. 3 is a front view showing a line guide groove of the rear sheet shown in FIG. 2.
FIG. 4 is a sectional view taken along a line I-I' shown in FIG. 1.
FIG. 5 is a front view showing a line guide groove according to another embodiment of the present invention.
FIG. 6 is a sectional view taken along a line II-II' shown in FIG. 5.
FIG. 7 is a sectional view taken along a line III-III' shown in FIG. 5.
FIG. 8 is a sectional view taken along a line IV-IV' shown in FIG. 5.
FIG. 9 is a transparent perspective view showing a braille according to another embodiment of the present invention.

### DETAILED DESCRIPTION OF THE INVENTION

Advantages and features of the present invention and methods for achieving the advantages and features of the present invention will become apparent with reference to the following detailed description of embodiments taken in conjunction with the accompanying drawings. However, the present invention is not limited to the embodiments set forth below, but may be implemented in various other forms. The embodiments disclosed herein are provided so that the disclosure of the present invention will be thorough and complete, and will fully convey the scope of the present invention to those of ordinary skill in the art to which the present invention pertains, and the present invention will only be defined by the claims. Like reference numerals refer to like elements throughout the specification.

Since shapes, sizes, proportions, angles, numbers, and the like shown in the drawings for describing the embodiments of the present invention are provided merely for illustrative purposes, the present invention is not limited to the details shown in the drawings. Like reference numerals refer to like elements throughout the specification. In addition, in the following description of the present invention, detailed descriptions of well-known technologies incorporated herein will be omitted when they make the gist of the present invention unnecessarily unclear.

Hereinafter, a teaching tool 10 enabling integrated perception education for visual and tactile sensations according to one embodiment of the present invention will be described with reference to the drawings.

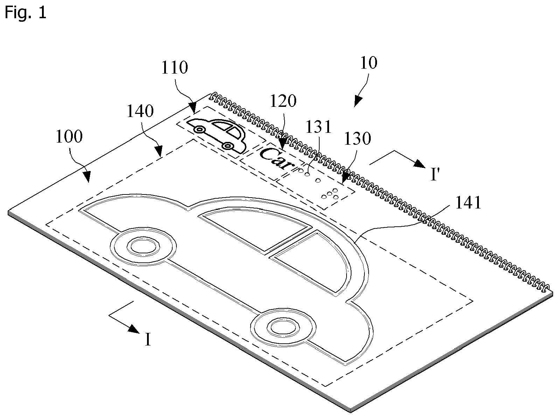

FIG. 1 is a perspective view schematically showing a front sheet 100 of a teaching tool 10 enabling integrated perception education for visual and tactile sensations according to one embodiment of the present invention.

Referring to FIG. 1, the teaching tool 10 enabling the integrated perception education for the visual and tactile sensations according to one embodiment of the present invention relates to a teaching tool that allows simultaneous learning of integrated perception for visual and tactile sensations, and may include a front sheet 100 for allowing a contour of an object to be recognized through a tactile sensation.

The front sheet 100 may include: information parts 110 and 120 in which a picture corresponding to the contour of the object to be expressed is shown, or a character string corresponding to the contour of the object is written; a braille part 130 including a braille 131 that protrudes; and a shape part 140 in which the contour of the object protrudes. While regions partitioned as in FIG. 1 for the information parts 110 and 120, the braille part 130, and the shape part 140 are not displayed, the partitioned regions may be displayed with a solid line or the like if necessary. In addition, portions of the information parts 110 and 120, the braille part 130, and the shape part 140 may overlap each other.

The front sheet 100 may be formed of a material such as a paper material or a synthetic resin, and may have a coated surface, but the front sheet 100 is not limited thereto, and may be changed as necessary. In addition, the front sheet 100 may be a laminate in which a plurality of materials having a predetermined thickness are combined.

A plurality of front sheets 100 may be provided and rotatably coupled to each other through a hinge part. The hinge part may include, but is not limited to, a spring and the like, and may include any binding scheme capable of rotating the front sheet 100.

The information parts 110 and 120 may be formed on the front sheet 100 to display information of the object to be expressed. The information parts 110 and 120 may include at least one of a picture information part 110 and a character information part 120 in order to guide information corresponding to an object of the braille part 130 and the shape part 140. The object displayed on the information parts 110 and 120 may include any object that may be visually expressed, such as a person, an animal, an object, and a character.

The picture information part 110 may guide the information of the object corresponding to the braille part 130 and the shape part 140 through the picture, and the picture information part 110 may be a region that is visually recognized. The picture information part 110 may be drawn to be smaller than a picture shown in the shape part 140, but is not limited thereto, and the picture information part 110 may have a different size as necessary.

The picture information part 110 may be colored to guide painting information of the shape part 140, so that a learner may refer to the picture information part 110 when coloring the shape part 140.

As shown in FIG. 1, according to one embodiment, a picture of a vehicle may be shown in the picture information part 110. The picture of the vehicle has been shown in the drawing with a black solid line, but is not limited thereto, and any line or surface that may display the picture may be included.

The character information part 120 may display the character string to guide the information of the object, and the character information part 120 may be a region that is visually recognized. The character information part 120 may display the character string for describing the picture shown in the shape part 140, and the character string may be expressed in a language of each country. The learner may learn letters for the picture drawn in the picture information part 110 or the shape part 140 through the character string written in the character information part 120. The character information part 120 may correspond to a name of the object to be expressed, but is not limited thereto, and the character information part 120 may display description information of the object.

As shown in FIG. 1, according to one embodiment, a character string of 'Car' may be written in the character information part 120 so that the character information part 120 may guide letters corresponding to the vehicle. The character information part 120 may be written, for example, in English, but is not limited thereto, and letters corresponding to a language situation of each country may be written in the character information part 120.

The picture information part 110 and the character information part 120 may be expressed at an upper end of the front sheet 100 as shown in the drawing, but are not limited thereto, and the picture information part 110 and the character information part 120 may be formed in a required region of the front sheet 100 as necessary.

The braille part 130 may be a region in which a braille 131 protrudes so that the learner may recognize the braille 131 through the tactile sensation. The braille part 130 may be configured such that the braille 131 corresponding to contents of the information parts 110 and 120 and the shape part 140 protrudes to guide the information of the object tactually and visually. The braille part 130 may be configured such that the braille 131 protrudes to guide information that describes the object of the information parts 110 and 120 and the shape part 140 as well as information corresponding to a name of the object of the information parts 110 and 120 and the shape part 140.

The braille part 130 may be configured such that the braille 131 corresponding to a vertical point and a horizontal point protrudes. The braille part 130 may be configured such that the braille 131 corresponding to at least one of a total of six points including two top points, two middle points, and two bottom points protrudes, in which the braille 131 may protrude according to a rule defined by a braille system proposed by the International Council on English braille (ICEB).

As shown in FIG. 1, according to one embodiment, the braille part 130 may be configured such that the braille 131 corresponding to the character string of 'Car' protrudes. For example, the braille part 130 may be configured such that top left and right brailles 131 corresponding to 'C' protrude, a top left braille 131 corresponding to 'a' protrudes, and a top left braille 131, middle left and right brailles 131, and a bottom left braille 131 corresponding to 'r' protrude. However, the braille part 130 is not limited thereto, and the braille part 130 may be configured such that any braille 131 for relevant information capable of guiding the contents of the information parts 110 and 120 protrudes.

In addition, the braille part 130 may include brailles 131 having mutually different heights so that an order of producing the brailles 131 may be learned. For example, the brailles 131 may be formed such that heights of the brailles 131 are gradually increased in the order of producing the brailles 131. On the contrary, the brailles 131 may be formed such that the heights of the brailles 131 are gradually decreased in the order of producing the brailles 131.

The shape part 140 may be configured such that the contour of the object corresponding to the content of the braille part 130 is expressed so that a shape of the object may be recognized through the tactile sensation, and the shape part 140 may include a tactile stimulus contour 141 obtained by allowing the contour of the object to protrude. The shape part 140 may be configured such that all contours for respective partitioned regions of the object protrude, so that the learner may be encouraged to perform tactile sensation learning on the shape of the expressed object.

The tactile stimulus contour 141 may be formed by allowing a contour that displays the shape of the object to protrude, in which only a portion of the contour may protrude. The tactile stimulus contour 141 may protrude in a continuous semicircular shape, but is not limited thereto, and the tactile stimulus contour 141 may include any shape that may be comfortably recognized by the learner through the tactile sensation.

The tactile stimulus contour 141 may further include an intersection point that further protrudes from the tactile stimulus contour 141. The intersection point may be a point in which at least two lines of the tactile stimulus contour 141 meet each other. The intersection point may protrude from the tactile stimulus contour 141 so that the learner may recognize a change in the shape through the intersection point.

The intersection point may further protrude as a number of lines of the tactile stimulus contour 141 that meet each other increases. For example, an intersection point at which three lines of the tactile stimulus contour 141 meet each other may protrude higher than an intersection point at which two lines of the tactile stimulus contour 141 meet each other.

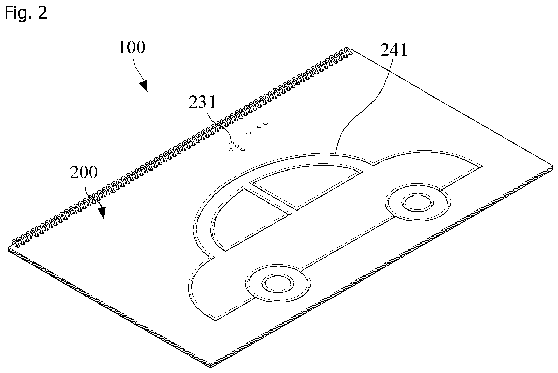

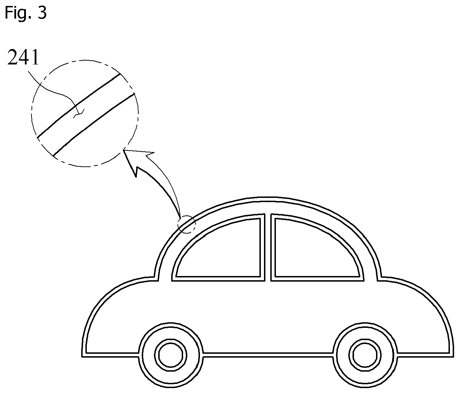

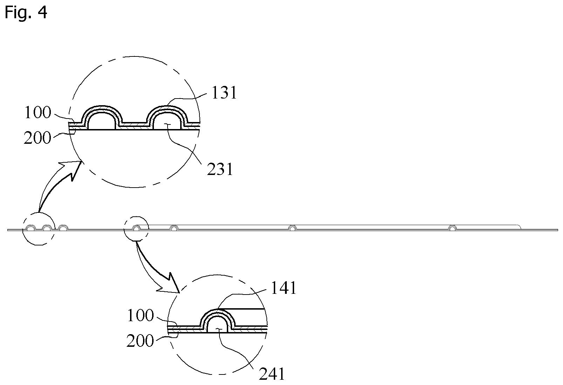

FIG. 2 is a perspective view schematically showing a rear sheet 200 of the teaching tool 10 enabling the integrated perception education for the visual and tactile sensations according to one embodiment of the present invention, FIG. 3 is a front view showing a line guide groove 241 of the rear sheet 200 shown in FIG. 2, and FIG. 4 is a sectional view taken along a line I-I' shown in FIG. 1.

Referring to FIGS. 2 to 4, the teaching tool 10 enabling the integrated perception education for the visual and tactile sensations may include a rear sheet 200 for allowing recognition through the tactile sensation, and allowing a shape to be directly recognized through a picture.

The rear sheet 200 may be a sheet adhered to the front sheet 100. The rear sheet 200 may be compressed to the front sheet 100 so as to be formed as one integrated sheet with the front sheet 100.

The rear sheet 200 may further include a braille guide groove 231 concavely formed along the braille 131 to allow a contour of the braille 131 to be recognized through the tactile sensation. The braille guide groove 231 may be a groove for guiding the learner to produce a braille corresponding to the information of the object, and the braille guide groove 231 may be formed in a region corresponding to the braille part 130 formed on the front sheet 100.

Referring to FIG. 4, the braille guide groove 231 may overlap the braille 131, so that the braille guide groove 231 may have the same shape as the braille 131. In other words, the braille guide groove 231 may be formed on an inner side of the braille 131.

However, the braille guide groove 231 is not limited thereto, the braille guide groove 231 corresponding to at least one of a total of six points including two top points, two middle points, and two bottom points may be formed in the rear sheet 200, and the braille guide groove 231 may be provided according to the rule defined by the braille system proposed by the International Council on English braille (ICEB). In other words, the braille guide groove 231 may be formed so as not to be vertically symmetrical to the braille 131.

The braille guide groove 231 may have an inclined section to guide a writing instrument to correctly produce a braille. The learner may primarily recognize the object through the braille 131 that protrudes, and may secondarily recognize the information of the object by producing a braille through the braille guide groove 231. However, a sectional shape of the braille guide groove 231 is not limited to an inclined sectional shape, and the shape of the braille guide groove 231 may be changed as necessary.

The rear sheet 200 may include a line guide groove 241 formed to allow the contour of the object to be recognized through the tactile sensation and configured to guide the contour of the object. The line guide groove 241 may be a groove for guiding the learner to draw a picture along the shape of the object, and the line guide groove 241 may be formed to correspond to the tactile stimulus contour 141 formed on the front sheet 100. Referring to FIG. 4, the line guide groove 241 may be formed to overlap the tactile stimulus contour 141, so that the line guide groove 241 may have the same shape as the tactile stimulus contour 141. In other words, the line guide groove 241 may be formed on an inner side of the tactile stimulus contour 141.

The line guide groove 241 may include a semicircle to have an inclined section so as to easily guide a movement of the writing instrument. The learner may primarily recognize the object through the tactile stimulus contour 141, and may secondarily recognize the object by drawing the picture through the line guide groove 241. However, a sectional shape of the line guide groove 241 is not limited to a semicircle, and the shape of the line guide groove 241 may be changed as necessary.

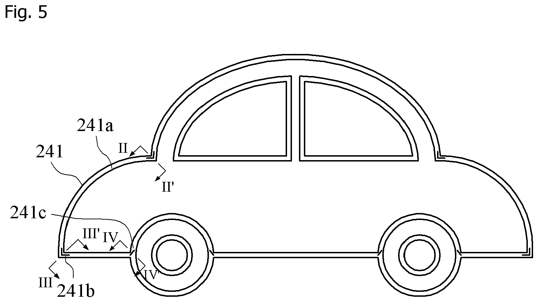

Hereinafter, a line guide groove 241 according to another embodiment of the present invention will be described with reference to FIGS. 5 to 8.

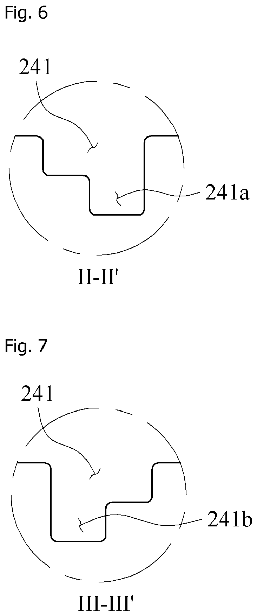

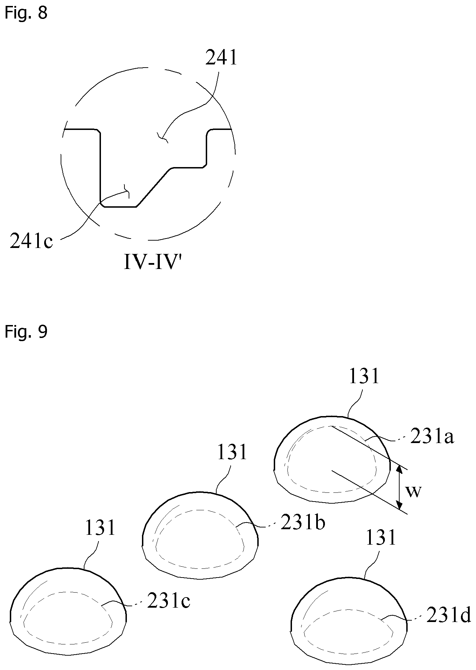

FIG. 5 is a front view showing a line guide groove 241 according to another embodiment of the present invention, FIG. 6 is a sectional view taken along a line II-II' shown in FIG. 5, FIG. 7 is a sectional view taken along a line III-III' shown in FIG. 5, and FIG. 8 is a sectional view taken along a line IV-IV' shown in FIG. 5.

The line guide groove 241 according to another embodiment of the present invention will be described with reference to FIGS. 5 to 8. Referring to FIGS. 5 to 7, the line guide groove 241 may include sub-line guide grooves 241a, 241b, and 241c having a deeper depth so as to more easily guide the movement of the writing instrument.

The sub-line guide grooves 241a, 241b, and 241c may be formed in an intersection region in which at least two lines of the line guide groove 241 meet each other, and may be formed in a deeper region than the line guide groove 241. The sub-line guide grooves 241a, 241b, and 241c may include: an inner sub-line guide groove 241a formed at an intersection point in which two lines are recessed; and an outer sub-line guide groove 241b formed at an intersection point in which two lines protrude. The inner sub-line guide groove 241a may be formed on an inner side of the shape of the object to easily guide an inward movement of the writing instrument. The outer sub-line guide groove 241b may be formed on an outer side of the shape of the object to easily guide an outward movement of the writing instrument. The inner sub-line guide groove 241a and the outer sub-line guide groove 241b may be inclined.

Referring to FIG. 8, the sub-line guide grooves 241a, 241b, and 241c may further include a division sub-line guide groove 241c formed in a region in which the line guide groove 241 is divided into at least two lines. The division sub-line guide groove 241c may be formed in the region in which the line guide groove 241 is divided into at least two lines, so that the learner may recognize that the line guide groove 241 is divided into at least two lines from a point of the division sub-line guide groove 241c. In addition, the learner may draw the picture in a prioritized direction from an intersection point through the division sub-line guide groove 241c. The division sub-line guide groove 241c may be inclined so as to more smoothly guide the writing instrument.

Hereinafter, a braille guide groove 231 according to another embodiment of the present invention will be described with reference to FIG. 9. FIG. 9 is a transparent perspective view showing a braille 131 according to another embodiment of the present invention. Referring to FIG. 9, braille guide grooves 231 may be formed on an inner side of the braille 131 with mutually different depths, so that an order of producing brailles 131 may be guided to the learner.

However, the braille guide groove 231 is not limited thereto, and the braille guide groove 231 may be formed in a region corresponding to the braille part 130. The braille guide groove 231 corresponding to at least one of a total of six points including two top points, two middle points, and two bottom points may be formed in the rear sheet 200, and the braille guide groove 231 may be provided according to the rule defined by the braille system proposed by the International Council on English braille (ICEB). In other words, the braille guide groove 231 may be formed so as not to be vertically symmetrical to the braille 131.

The braille guide grooves 231 may gradually have a deeper depth according to an order. As shown in FIG. 9, the braille guide grooves 231 may be formed such that a depth w of a first braille guide groove 231a formed at a position that has to be produced with the highest priority is the deepest, and a depth w of a fourth braille guide groove 231d formed at a position that has to be produced with the lowest priority is the shallowest. In other words, depths w of the first braille guide groove 231a, the second braille guide groove 231b, the third braille guide groove 231c, and the fourth braille guide groove 231d may sequentially and gradually become deep.

However, the braille guide grooves 231 are not limited thereto, and the braille guide grooves 231 may gradually have a shallower depth according to the order.

The above descriptions of the present invention are for illustrative purposes, and it will be understood by those of ordinary skill in the art to which the present invention pertains that the present invention can be easily modified into other specific forms without changing the technical idea or essential characteristics of the present invention. Therefore, the embodiments described above are illustrative in all aspects, and are not to be construed as limiting. For example, each element described as a single element may be distributed and implemented, and similarly, elements described as being distributed may be implemented in a combined form.

The scope of the present invention is defined by the appended claims rather than the detailed description, and the scope of the present invention should be construed as encompassing all changes or modifications derived from the meaning and scope of the claims and the equivalent concepts thereof.

## Claims

1. A teaching tool enabling integrated perception education for visual and tactile sensations, the teaching tool comprising:
a front sheet for allowing a contour of an object to be recognized through a tactile sensation,
wherein the front sheet includes:
an information part in which a picture related to the object is shown, or a character string related to the object is written;
a braille part for displaying a dot corresponding to vertical and horizontal dots of a braille, in which the braille for guiding information related to the object protrudes; and
a shape part in which the contour of the object corresponding to information of the braille part is expressed, and the shape part includes a tactile stimulus contour obtained by allowing the contour of the object to protrude so as to be recognized through the tactile sensation.

2. The teaching tool of claim 1, further comprising a rear sheet attached to a rear surface of the front sheet,
wherein the rear sheet includes a line guide groove formed to allow the contour of the object to be recognized through the tactile sensation and configured to guide the contour of the object.

3. The teaching tool of claim 2, wherein the line guide groove overlaps the tactile stimulus contour formed on the front sheet.

4. The teaching tool of claim 2, wherein the rear sheet further includes a braille guide groove formed in a region corresponding to the braille part of the front sheet.
